# EUROPEAN PATENT SPECIFICATION

(11) **EP 2 657 047 B1**
(45) Date of publication and mention of the grant of the patent: **03.08.2016**
(21) Application number: 13164826.3
(22) Date of filing: 23.04.2013
(51) Int. Cl.: B60C 9/20, B60C 9/22, B60C 9/18

(54) **Accordion spiral overlay for a pneumatic tire**
Akkordenspiraldeckschicht für einen Luftreifen
Recouvrement en spirale en accordéon pour pneumatique

(30) Priority: 26.04.2012 US 201213456656
(43) Date of publication of application: 30.10.2013
(73) Proprietor: The Goodyear Tire & Rubber Company, Akron, Ohio 44316 (US)
(72) Inventor: Croissant, Bernard, B-6600 Bastogne (BE)
(74) Representative: Kutsch, Bernd

(56) References cited:
- EP-A1- 0 455 454
- JP-A- 2001 322 405
- US-A- 5 076 336

## Description

The present invention relates to a pneumatic tire and, more specifically, to an overlay ply for a pneumatic tire.

### Background of the Invention

Conventionally, a radial tire may be provided with a belt reinforcement comprising breaker plies and a band ply (or overlay), wherein the band cords may be generally laid in parallel with the circumferential direction of the tire and the breaker cords may be inclined with respect to the circumferential direction. Edge plies may be effective for increasing the hooping force at the breaker edges, and accordingly effective for preventing ply edge looseness and separation.

Such a band ply may be formed by winding a ply material having the same width as its finishing width, around the carcass, and the ends of the ply may be overlapped at a predetermined length. Accordingly, thickness and rigidity may be increased at the overlap, and RRO (Radial Runout) may be increased, and further, the tire uniformity may be disturbed.

A jointless band ply may be used by forming an edge ply at each edge of a breaker and winding a strip separately at each breaker edge. Since the number of the windings or turns in each band ply may be small and the both ends of the strip may be free, the wound strip may loosen and shift during a tire vulcanizing process by the increased cord tension, and accordingly the band ply may have an uneven thickness distribution to increase RRO and disturb tire uniformity.

One conventional jointless band ply may comprise a strip wound spirally at regular pitches from one edge to the other edge of a breaker, while slightly overlapping the adjacent edges thereof. Accordingly, the hoop effect may not be increased at the breaker edge regions where a strong hooping force may be required.

Another conventional band may have a double layered structure at the edge of a breaker similar to a band ply wherein a strip, including reinforcing cords of 1 to 20 in number may be wound, while traversing a breaker. However, the traversing direction may be changed at least twice wind the strip around a previously wound portion thereof. Therefore, the band ply may not obtain a dimensional accuracy and a positional accuracy, as well reducing productivity.

Another conventional band ply may be a strip wound around a breaker wherein the strip may be overlapped. In a central region, the overlap may be 50% of the strip width and the overlap may be increased to 75% in side regions. Accordingly, the band ply may have a double layered structure even in the central region, which may result in an increase in the hooping force in the central region as well as a decrease in cornering stiffness. The tire weight may also increase.

US-A-5,076,336 describes a tire in accordance with the preamble of claim 1. A tire with a similar overlay layer arrangement in also described in JP-A-2001-322405.

EP-A-0 455 454 describes a tire with an overlay layer made by winding a strip wherein the winding pitch of the strip at the axially outer sides of the overlay is about 50 % of the width of the strip.

### Definitions

The following definitions are controlling for the disclosed invention.

"Axial" and "axially" are used herein to refer to lines or directions that are parallel to the axis of rotation of the tire.

"Circumferential" means lines or directions extending along the perimeter of the surface of the annular tire parallel to the Equatorial Plane (EP) and perpendicular to the axial direction; it can also refer to the direction of the sets of adjacent circular curves whose radii define the axial curvature of the tread, as viewed in cross section.

"Cord" means one of the reinforcement strands which the reinforcement structures of the tire comprise.

"Equatorial plane (EP)" means the plane perpendicular to the tire's axis of rotation and passing through the center of its tread; or the plane containing the circumferential centerline of the tread.

"Lateral" means an axial direction.

"Ply" means a cord-reinforced layer of rubber-coated radially deployed or otherwise parallel cords.

"Radial" and "radially" are used to mean directions radially toward or away from the axis of rotation of the tire.

"Radial Ply Structure" means the one or more carcass plies of which at least one ply has reinforcing cords oriented at an angle of between 65° and 90° with respect to the equatorial plane of the tire.

### Summary of the Invention

The invention relates to a tire in accordance with claim 1.

Dependent claims refer to preferred embodiments of the invention.

A first example pneumatic tire in accordance with the present invention includes a carcass extending between bead portions through sidewall portions and a tread portion and a belt reinforcement structure. The carcass has at least one ply of parallel cords extending proximately to bead cores of the bead portions. The belt reinforcement structure is disposed radially outside of the carcass and radially inside of the tread portion. The belt reinforcement structure includes an overlay or overlay ply. The overlay includes a strip of parallel cords wound spirally and circumferentially from a first axially outer side of the overlay ply to a second axially outer side of the overlay. The distance between corresponding parts of adjacent strip windings defines a winding pitch. The winding pitch of the strip changes in an axially inward direction of the pneumatic tire towards the equatorial plane of the pneumatic tire such that the winding pitch in a central region of the belt reinforcement structure is increased relative to respective first and second axially outer sides of the overlay on each side of the equatorial plane of the pneumatic tire. The winding pitch of the strip at both axially outer sides of the overlay is in a range from 55% to 233% a width of the strip. A width of the central region is in a range from 1/3 to 7/8 a width of the belt reinforcement structure. Spaces of 4 mm to 20 mm are formed in the central region between axially adjacent edges of the strip of the overlay. Spaces of 27% to 133% of the width of the strip are formed in the central region between the axially adjacent edges of the strip of the overlay.

According to another aspect of the first example pneumatic tire, the winding pitch at both axially outer sides may be in a range from 55% to 85% of the width of the strip.

According to still another aspect of the first example pneumatic tire, the winding pitch at both axially outer sides may be in a range from 60% to 75% or 65% to 70% of the width of the strip.

The winding pitch at both axially outer sides is in a range from 120% to 180% of the width of the strip.

According to still another aspect of the first example pneumatic tire, the width of the central region may be 33% to 83% a width of the belt reinforcement structure.\

According to yet another aspect of the first example pneumatic tire, spaces from 4 mm to 12 mm may be formed in the central region between axially adjacent edges of the strip of the overlay ply.

According to still another aspect of the first example pneumatic tire, spaces of 27% to 80% of the strip may be formed in the central region between the axially adjacent edges of the strip of the overlay ply.

According to yet another aspect of the first example pneumatic tire, the belt reinforcement structure may comprise at least one breaker layer. The at least one breaker layer is disposed radially outside the carcass. The at least one breaker layer may comprise two plies of cords inclined with respect to the equatorial plane of the pneumatic tire such that cords in one ply cross cords in the other ply.

According to still another aspect of the first example pneumatic tire, the overlay ply is disposed radially outside of the breaker layer and the strip of parallel cords may be wound spirally and circumferentially around the breaker layer from about one axial edge of the breaker layer to about the other axial edge of the breaker layer.

According to yet another aspect of the first example pneumatic tire, the overlay is disposed radially outside of the breaker layer and the strip of parallel cords may be wound spirally and circumferentially around the breaker layer from overhanging one axial edge of the breaker
layer to overhanging the other axial edge of the breaker layer such that each axial edge of overlay is aligned proximate to a respective axial edge of the breaker layer.

According to still another aspect of the first example pneumatic tire, the width of the strip may be in a range from 9 mm to 27 mm.

According to yet another aspect of the first example pneumatic tire, the winding pitch of the strip may change continuously from in an axially inward direction towards the equatorial plane of the pneumatic tire such that the winding pitch in a central region of the belt reinforcement structure is increased continuously compared to the respective first and second axially outer side to the equatorial plane of the pneumatic tire on each side of the equatorial plane.

According to still another aspect of the first example pneumatic tire, the winding pitch may form an accordion structure.

According to yet another aspect of the first example pneumatic tire, the winding pitch of the strip may change in steps, from in an axially inward direction towards the equatorial plane of the pneumatic tire such that the winding pitch in a central region of the belt reinforcement structure is increased in steps compared to the respective first and second axially outer side to the equatorial plane of the pneumatic tire on each side of the equatorial plane.

According to yet another aspect of the first example pneumatic tire, the thickness of the strip may be in the range from 0.5 mm to 1.1 mm.

According to still another aspect of the first example pneumatic tire, the winding pitch in the central region at the equatorial plane of the pneumatic tire may be about two times the winding pitch at the first and second axially outer side.

According to yet another aspect of the first example pneumatic tire, the spirally and circumferentially wound strip may be a continuous spirally and circumferentially wound strip.

A comparative example pneumatic tire includes a carcass extending between bead portions through sidewall portions and a tread portion and a belt reinforcement structure. The carcass has at least one ply of parallel cords extending proximate to bead cores of the bead portions. The belt reinforcement structure is disposed radially outside of the carcass and radially inside of the tread portion. The belt reinforcement structure includes an overlay or overlay ply and at least one breaker layer. The at least one breaker layer is disposed radially outside the carcass and radially inside the overlay. The at least one breaker layer includes two plies of cords inclined with respect to the equatorial plane of the pneumatic tire such that cords in one ply cross cords in the other ply. The overlay ply includes a strip of parallel cords wound spirally and circumferentially from a first axially outer side of the overlay to a second axially outer side of the overlay. The distance between corresponding parts of adjacent strip windings defines a winding pitch. The winding pitch of the strip changes in an axially inward direction of the pneumatic tire towards the equatorial plane of the pneumatic tire such that the winding pitch in a central region of the belt reinforcement structure is increased compared to the respective first and second axially outer sides of the overlay on each side of the equatorial plane. The winding pitch at both axially outer sides being in a range of from 55% to 85% of a width of the strip. The width of the central region is in a range of from 1/3 to 5/6 a width of the belt reinforcement structure. Spaces of 4 mm to 12 mm are formed in the central region between the axially adjacent edges of the strip of the overlay ply. Spaces of 27% to 80% of the width of the strip are formed in the central region between the axially adjacent edges of the strip of the overlay ply.

A second example pneumatic tire in accordance with the present invention includes a carcass extending between bead portions through sidewall portions and a tread portion and a belt reinforcement structure. The carcass has at least one ply of parallel cords extending proximate to bead cores of the bead portions. The belt reinforcement structure is disposed radially outside of the carcass and radially inside of the tread portion. The belt reinforcement structure includes an overlay or overlay ply and at least one breaker layer. The at least one breaker layer is disposed radially outside the carcass and radially inside the overlay. The at least one breaker layer includes two plies of cords inclined with respect to the equatorial plane of the pneumatic tire such that cords in one ply cross cords in the other ply. The overlay includes a strip of parallel cords wound spirally and circumferentially from a first axially outer side of the overlay to a second axially outer side of the overlay. The distance between corresponding parts of adjacent strip defines a winding pitch. The winding pitch of the strip changes in an axially inward direction of the pneumatic tire towards the equatorial plane of the pneumatic tire such that the winding pitch in a central region of the belt reinforcement structure is increased compared to the respective first and second axially outer sides of the overlay on each side of the equatorial plane. The winding pitch at both axially outer sides being in a range from 120% to 180% of a width of the strip such that the strip at both axially outer sides does not overlap. The width of the central region is in a range of from 1/3 to 5/6 a width of the belt reinforcement structure. Spaces of 4 mm to 12 mm are formed in the central region between the axially adjacent edges of the strip of the overlay ply. Spaces of 27% to 80% of the width of the strip are formed in the central region between the axially adjacent edges of the strip of the overlay ply.

### Brief Description of the Drawings

Example embodiments of the present invention will now be described in detail with reference to the accompanying drawings, in which:
FIG. 1 is a schematic sectional view showing an example of the present invention;
FIG. 2 is a schematic sectional view an overlay ply in accordance with the present invention; and
FIG. 3 is a schematic sectional view of the example overlay ply of FIG. 2.

### Detailed Description of an Example of the Present Invention

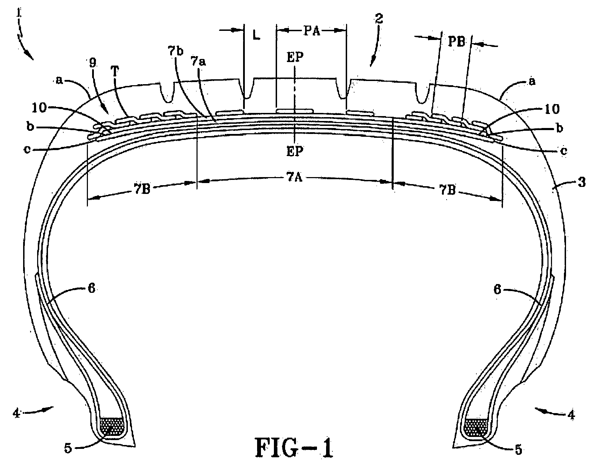

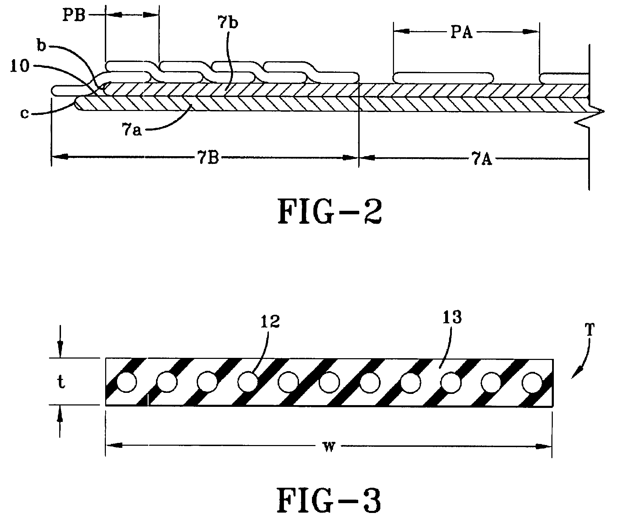

In FIGS. 1 and 2, a pneumatic tire 1 includes a pair of bead cores 5 disposed one in each bead portion 4 of the pneumatic tire, a carcass 6 extending between the bead portions through a tread portion 2 and sidewall portions 3 of the pneumatic tire and optionally turned up around the bead cores 5 from the inside to the outside of the pneumatic tire, and a belt reinforcement disposed between the carcass and the tread portion. The tread portion 2 is disposed radially outside the carcass 6. The belt reinforcement may include a breaker layer 7a, 7b disposed radially outside the carcass 6 and comprises an overlay or overlay ply 9, or band ply, disposed radially outside of the breaker layers 7a, 7b.

The carcass 6 may include at least one ply of cords arranged radially at 70 to 90 degrees with respect to the equatorial plane EP of the pneumatic tire 1. These cords may be inorganic fiber cords, such as steel, glass, carbon, etc., or organic fiber cords, such as nylon, polyester, rayon, aromatic polyamide, aramid, etc. The breaker may include two plies 7a, 7b of parallel cords. The radially inner ply 7a may have an axial width close to the tread width between the edges a of the tread portion 2. The radially outer ply 7b may have a narrower width than the inner ply 7a. The inner ply 7a may include portions 10 projecting from the edges b of the outer ply 7b to the edges c of the inner ply 7a.

The breaker plies 7a, 7b may have high modulus cords, such as steel cords, aromatic polyamide cords, etc. The breaker cords may be arranged parallel each other and inclined at small angles (e.g., 18º to 32 º) with respect to the equatorial plane EP to cross the cords of the other breaker 7b, 7a such that the pneumatic tire 1 may not have directional characteristics and may have an improved reinforcing and hooping effect by the breaker plies 7a, 7b. The breaker plies 7a, 7b may be formed by winding a ply material with the same width as the finished ply width.

The overlay 9 may be formed by winding a narrow band strip T around the breaker ply 7b spirally and continuously from one edge to the other edge thereof, in FIG. 2 overhanging the left edge c overhanging the right edge c of the inner breaker ply 7a. As shown in FIG. 3, the band strip T may have reinforcing cords 12 laid in parallel to each other in the lengthwise direction of the band strip and a topping rubber 13 in which the reinforcing cords may be embedded. The cords may alternatively be arranged in the widthwise direction of the strip T (not shown).

The spiral wound pitch of the band strip T may continuously increase at a first rate as the band strip T travels axially inward within a central region 7A of the breaker plies 7a, 7b and may be constant (or slightly increasing inward) in side regions 7B of the breaker plies. The central region 7A may be centered on the equatorial plane EP and the width thereof may be, for example, 33% to 83% or 33% to 66% or 33% to 88% times the axial width between the edges c of the inner breaker ply 7a. In each of the side regions 7B, the spiral pitches PA may be set, for example, at 120% to 180% the width w of the band strip T. In the central region 7A, the spiral pitch PA as the band strip T travels radially inward within the central region 7A of the breaker plies 7a, 7b may be such that the spaces L between the axially adjacent parts of the wound band strip may be continuously increasing. An example band strip T may have a width w of 9 mm to 27 mm or 10 mm or 15 mm or 20 mm or 25 mm with a side region pitch PB of 7.5 mm and a central region pitch PA continuously increasing to as much as 100 mm at the equatorial plane EP, where the pitch PA may begin to continuously decrease as the band strip T travels to the other side region thereby forming an accordion-like structure. Spaces of 4 mm to 20 or 4 mm to 12 mm may be formed in the central region 7A between axially adjacent edges of the strip T of the overlay ply 9. Spaces of 27% to 133% or 27 % to 80% of the width w of the strip T may be formed in the central region 7A between the axially adjacent edges of the strip T of the overlay 9.

The band strip T may thus cover the entire width of the side regions 7B of the breakers 7a, 7b. Accordingly, at the edges c of the breakers 7a, 7b, the band strip T may be wound completely along those edges c (e.g., the first turn and last turn of the band strip may be made circumferentially along the respective edges). In the winding process, at such first and last ends, the band strip T may protrude from the edges c by a half strip width w and the protruding portions may remain or be cut off.

The number of the reinforcing cords in the band strip T may be in the range of 10 to 25 such that the band strip has a suitable width w for winding work allowing a smooth change in the pitch PA of the central region 7A. If the number is less than 10, the width w of the band strip T may be too small, and the winding work efficiency may be poor and the dimensional accuracy of the band strip may be lost. If the number is more than 25, the width w of the band strip T may be too large, and the strip may be creased in the transitional central region 7A, which also may result in a poor winding efficiency.

The width w of the band strip T may be in the range of 10 mm to 30 mm, or 12 mm to 25 mm. The thickness t of the band strip T may be in the range of 0.5 mm to 1.1 mm. In order to reduce the difference in rigidity between the stiff breakers 7a, 7b and the rubber of the tread portion 2, example nylon or polyester fiber cords 12 may have a tensile strength of not more than 100 kgf/mm² and be used for reinforcing the band strip T and overlay ply 9.

Particularly, nylon cords may have a heat shrinking characteristic for increasing the hooping force of the band strip T to the breaker 7a, 7b through the vulcanizing process. For example, 6,6-nylon cords with cord thickness and elongation specified in 7.7 Elongation Percentage in Constant Load in JIS-L1017, Testing Methods for Chemical Fiber Tire Cords and an elastic modulus of 1000d/2 to 1500d/2, 8% to 10%, and 4 x 10⁴ to 10 x 10⁴ kgf/sq.cm, respectively, may be used. Further, for the topping rubber 13 of the band strip T, various rubber compounds may be used, but a compound containing 30 to 95 parts by weight of natural rubber (NR) and 5 to 70 parts by weight of styrene-butadiene rubber (SBR) may demonstrate strength and durability against repeated deformation and a well-controlled temperature rise due to the hysteresis loss.

Such an overlay ply 9 may thus reduce tire cost by decreasing turns of band strip T (e.g., as many as 3). The increasing pitch PA to the equatorial plane EP may thus form an accordion structure in the center region 7A of the breaker plies 7a, 7b).

As explained above, the overlay ply may be formed by winding a strip spirally and continuously from one edge to the other edge of the breaker. Therefore, the thickness variation of the band in the circumferential direction of the tire is restricted only at the starting end and the stopping end of the wound strip, and the uniformity of the tire may be improved and RRO reduced. Further, as the winding pitch may be set at a half of the strip width in the side regions, the overlay ply may have a double-layered structure, but in the central region, the winding pitch may be greater than in the side regions. Therefore the hoop effect of the overlay ply may be varied axially to be larger in the side regions than in the central region.

As stated above, an overlay ply structure 9 in accordance with the present invention produces excellent cost, weight, and performance characteristics in a pneumatic tire 1. This structure 9 thus enhances the performance of the tire pneumatic 1, even though the complexities of the structure and behavior of the pneumatic tire are such that no complete and satisfactory theory has been propounded.

## Claims

1. A pneumatic tire comprising:
a carcass (6) extending between bead portions (4) through sidewall portions (3) and a tread portion (2); and
a belt reinforcement structure disposed radially outside of the carcass (6) and radially inside of the tread portion (2), the belt reinforcement structure comprising an overlay (9) comprising a strip (T) including parallel cords, wherein the overlay (9) is wound spirally and circumferentially from a first axially outer side of the overlay (9) to a second axially outer side of the overlay (9), the distance between corresponding parts of adjacent strip windings defining a winding pitch (PA, PB); wherein
the winding pitch (PA, PB) of the strip (T) changes in an axially inward direction of the pneumatic tire (1) towards the equatorial plane (EP) of the pneumatic tire (1) such that the winding pitch (PA) in a central region (7A) of the belt reinforcement structure is increased relative to respective first and second axially outer sides of the overlay (9) on each side of the equatorial plane (EP) of the pneumatic tire (1), wherein
the overlay (9) comprises spaces in a range of from 4 mm to 20 mm in the central region (7A) between axially adjacent edges of the strip (T) of the overlay (9) and/or the overlay (9) comprises spaces in a range of from 27% to 133% of the width of the strip (T) in the central region (7A) between axially adjacent edges of the strip (T) of the overlay (9), and wherein
the width of the central region (7A) is in a range from 1/3 to 7/8 of the width of the belt reinforcement structure, **characterized in that**
the winding pitch (PB) of the strip (T) at both axially outer sides of the overlay (9) is in a range from 120% to 180% of the width (w) of the strip (T).

2. The pneumatic tire as set forth in claim 1 wherein the width of the central region (7A) is in a range of from 33% to 83%, alternatively in a range from 40% to 60%, of the width of the belt reinforcement structure.

3. The pneumatic tire as set forth in claim 1 or 2 wherein the overlay (9) comprises spaces in a range of from 4 mm to 12 mm in the central region (7A) between axially adjacent edges of the strip (T) of the overlay (9) and/or spaces of 27% to 80% of the width (w) strip (T) in the central region (7A) between axially adjacent edges of the strip (T) of the overlay (9).

4. The pneumatic tire as set forth in at least one of the previous claims wherein the belt reinforcement structure comprises at least one breaker layer (7a, 7b), the at least one breaker layer (7a, 7b) being disposed radially outside the carcass (6).

5. The pneumatic tire as set forth in claim 4 wherein each of the at least one breaker layer (7a, 7b) comprises a ply with cords (12) inclined with respect to the equatorial plane of the pneumatic tire such that cords (12) in one ply cross cords in an other or adjacent ply.

6. The pneumatic tire as set forth in claim 4 or 5 wherein the overlay (9) is disposed radially outside of the at least one breaker layer (7a, 7b) and the strip (T) is wound spirally and circumferentially around the at least one breaker layer (7a, 7b) from
(i) about one axial edge of the at least one breaker layer (7a, 7b) to about the other axial edge of the at least one breaker layer (7a, 7b); or
(ii) overhanging one axial edge of the at least one breaker layer (7a, 7b) to overhanging the other axial edge of the at least one breaker layer (7a, 7b) preferably such that each axial edge of the overlay (9) is aligned proximate to a respective axial edge of the breaker layer.

7. The pneumatic tire as set forth in at least one of the previous claims wherein the width (w) of the strip (T) is in a range of from 9 mm to 27 mm and/or wherein the thickness (t) of the strip (T) is in the range of from 0.5 mm to 1.1 mm.

8. The pneumatic tire as set forth in at least one of the previous claims wherein the winding pitch (PA, PB) of the strip (T) changes continuously or stepwise in an axially inward direction of the pneumatic tire (1) towards the equatorial plane (EP) of the pneumatic tire (1) such that the winding pitch (PA) in a central region (7A) of the belt reinforcement structure is increased relative to respective first and second axially outer sides of the overlay (9) on each side of the equatorial plane (EP) of the pneumatic tire (1).

9. The pneumatic tire as set forth in at least one of the previous claims wherein the winding pitch forms an accordion structure.

10. The pneumatic tire as set forth in at least one of the previous claims wherein the spirally and circumferentially wound strip (T) is a continuous spirally and circumferentially wound strip (T).

## Patentansprüche

1. Luftreifen, umfassend:
eine Karkasse (6), welche sich zwischen Wulstbereichen (4) durch Seitenwandbereiche (3) und einen Laufflächenbereich (2) erstreckt; und
eine radial außerhalb der Karkasse (6) und radial innerhalb des Laufflächenbereichs (2) angeordnete Gürtelverstärkungsstruktur, wobei die Gürtelverstärkungsstruktur eine Decklage (9) umfasst, welche einen Streifen (T), der parallele Korde beinhaltet, umfasst, wobei die Decklage (9) spiralförmig und in Umfangsrichtung von einer ersten axial äußeren Seite der Decklage (9) bis zu einer zweiten axial äußeren Seite der Decklage (9) gewickelt ist, wobei der Abstand zwischen entsprechenden Teilen benachbarter Streifenwicklungen eine Wicklungssteigung (PA, PB) definiert; wobei
die Wicklungssteigung (PA, PB) des Streifens (T) sich in einer axialen Einwärtsrichtung des Luftreifens (1) zu der Äquatorebene (EP) des Luftreifens (1) hin ändert, sodass die Wicklungssteigung (PA) in einem zentralen Gebiet (7A) der Gürtelverstärkungsstruktur bezüglich einer ersten beziehungsweise zweiten axial äußeren Seite der Decklage (9) an beiden Seiten der Äquatorebene (EP) des Luftreifens (1) zunimmt, wobei
die Decklage (9) Räume in einem Bereich von 4 mm bis 20 mm in dem zentralen Gebiet (7A) zwischen axial benachbarten Kanten des Streifens (T) der Decklage (9) umfasst, und/oder die Decklage (9) Räume in einem Bereich von 27% bis 133% der Breite des Streifens (T) in dem zentralen Gebiet (7A) zwischen axial benachbarten Kanten des Streifens (T) der Decklage (9) umfasst, und wobei
die Breite des zentralen Gebiets (7A) in einem Bereich von 1/3 bis 7/8 der Breite der Gürtelverstärkungsstruktur liegt, **dadurch gekennzeichnet, dass**
die Wicklungssteigung (PB) des Streifens (T) an beiden axial äußeren Seiten der Decklage (9) in einem Bereich von 120% bis 180% der Breite (w) des Streifens (T) liegt.

2. Luftreifen, wie in Anspruch 1 dargelegt, wobei die Breite des zentralen Gebiets (7A) in einem Bereich von 33% bis 83%, alternativ in einem Bereich von 40% bis 60%, der Breite der Gürtelverstärkungsstruktur liegt.

3. Luftreifen, wie in Anspruch 1 oder 2 dargelegt, wobei die Decklage (9) Räume in einem Bereich von 4 mm bis 12 mm in dem zentralen Gebiet (7A) zwischen axial benachbarten Kanten des Streifens (T) der Decklage (9) und/oder Räume von 27% bis 80% der Breite (w) des Streifens (T) in dem zentralen Gebiet (7A) zwischen axial benachbarten Kanten des Streifens (T) der Decklage (9) umfasst.

4. Luftreifen, wie in mindestens einem der vorhergehenden Ansprüche dargelegt, wobei die Gürtelverstärkungsstruktur mindestens eine Gürtellage (7a, 7b) umfasst, wobei die mindestens eine Gürtellage (7a, 7b) radial außerhalb der Karkasse (6) angeordnet ist.

5. Luftreifen, wie in Anspruch 4 dargelegt, wobei jede der mindestens einen Gürtellage (7a, 7b) eine Lage mit Korden (12) umfasst, die in Bezug auf die Äquatorebene des Luftreifens so geneigt sind, dass Korde (12) in einer Lage Korde in einer anderen oder benachbarten Lage kreuzen.

6. Luftreifen, wie in Anspruch 4 oder 5 dargelegt, wobei die Decklage (9) radial außerhalb von der mindestens einen Gürtellage (7a, 7b) angeordnet ist und der Streifen (T) spiralförmig und in Umfangsrichtung um die mindestens eine Gürtellage (7a, 7b) herumgewickelt ist, von
(i) über einer axialen Kante der mindestens einen Gürtellage (7a, 7b) bis zu über die andere axiale Kante der mindestens einen Gürtellage (7a, 7b); oder
(ii) überhängend über einer axialen Kante der mindestens einen Gürtellage (7a, 7b) bis zu überhängend über die andere axiale Kante der mindestens einen Gürtellage (7a, 7b), bevorzugt derart, dass jede axiale Kante der Decklage (9) nahe einer jeweiligen axialen Kante der Gürtellage ausgerichtet ist.

7. Luftreifen, wie in mindestens einem der vorhergehenden Ansprüche dargelegt, wobei die Breite (w) des Streifens (T) in einem Bereich von 9 mm bis 27 mm liegt, und/oder wobei die Dicke (t) des Streifens (T) im Bereich von 0,5 mm bis 1,1 mm liegt.

8. Luftreifen, wie in mindestens einem der vorhergehenden Ansprüche dargelegt, wobei die Wicklungssteigung (PA, PB) des Streifens (T) sich kontinuierlich oder schrittweise in einer axialen Einwärtsrichtung des Luftreifens (1) zu der Äquatorebene (EP) des Luftreifens (1) hin ändert, sodass die Wicklungssteigung (PA) in einem zentralen Gebiet (7A) der Gürtelverstärkungsstruktur in Bezug auf eine jeweilige erste und zweite axial äußere Seite der Decklage (9) an beiden Seiten der Äquatorebene (EP) des Luftreifens (1) zunimmt.

9. Luftreifen, wie in mindestens einem der vorhergehenden Ansprüche dargelegt, wobei die Wicklungssteigung eine Akkordeonstruktur bildet.

10. Luftreifen, wie in mindestens einem der vorhergehenden Ansprüche dargelegt, wobei der spiralförmig und in Umfangsrichtung gewickelte Streifen (T) ein kontinuierlicher spiralförmig und in Umfangsrichtung gewickelter Streifen (T) ist.

## Revendications

1. Bandage pneumatique comprenant :
une carcasse (6) s'étendant entre des portions (4) correspondant aux talons, en passant par des portions (3) correspondant aux flancs, et une portion (2) correspondant à la bande de roulement ; et
une structure de renforcement de ceinture disposée en direction radiale à l'extérieur de la carcasse (6) et en direction radiale à l'extérieur de la portion (2) correspondant à la bande de roulement, la structure de renforcement de ceinture comprenant un revêtement (9) comprenant une bande (T) englobant des câblés parallèle, le revêtement (9) étant enroulé en spirale et en direction circonférentielle à partir d'un premier côté externe en direction axiale du revêtement (9) jusqu'à un deuxième côté externe en direction axiale du revêtement (9), la distance entre les parties correspondantes d'enroulements de bande adjacents définissant un pas d'enroulement (PA, PB) ; dans lequel
le pas d'enroulement (PA, PB) de la bande (T) change, dans la direction orientée vers l'intérieur en direction axiale du bandage pneumatique (1), en direction du plan équatorial (EP) du bandage pneumatique (1) d'une manière telle que le pas d'enroulement (PA) dans la zone centrale (7A) de la structure de renforcement de ceinture est supérieur par rapport au premier et au deuxième côté externe respectifs en direction axiale du revêtement (9) de chaque côté du plan équatorial (EP) du bandage pneumatique (1) ; dans lequel
le revêtement (9) comprend des espaces dans la plage de 4 mm à 20 mm dans la zone centrale (7A) entre des bords adjacents en direction axiale de la bande (T) du revêtement (9) et/ou le revêtement (9) comprend des espaces dans la plage de 27 % à 133 % de la largeur de la bande (T) dans la zone centrale (7A) entre des bords adjacents en direction axiale de la bande (T) du revêtement (9) ; et dans lequel
la largeur de la zone centrale (7A) se situe dans la plage de 1 /3 à 7/8 de la largeur de la structure de renforcement de ceinture ; **caractérisé en ce que**
le pas d'enroulement (PB) de la bande (T) aux deux côtés externes en direction axiale du revêtement 9 se situe dans la plage de 120 % à 180 % de la largeur (w) de la bande (T).

2. Bandage pneumatique selon la revendication 1, dans lequel la largeur de la zone centrale (7A) se situe dans la plage de 33 % à 83 %, en variante dans la plage de 40 % à 60 % de la largeur de la structure de renforcement de ceinture.

3. Bandage pneumatique selon la revendication 1 ou 2, dans lequel le revêtement (9) comprend des espaces dans la plage de 4 mm à 12 mm dans la zone centrale (7A) entre des bords adjacents en direction axiale de la bande (T) du revêtement (9) et/ou des espaces dans la plage de 27 % à 80 % de la largeur (w) de la bande (T) dans la zone centrale (7A) entre des bords adjacents en direction axiale de la bande (T) du revêtement (9).

4. Bandage pneumatique selon au moins une des revendications précédentes, dans lequel la structure de renforcement de ceinture comprend au moins une couche faisant office de nappe de sommet (7a, 7b), ladite au moins une couche faisant office de nappe de sommet (7a, 7b) étant disposée à l'extérieur de la carcasse (6) en direction radiale.

5. Bandage pneumatique selon la revendication 4, dans lequel ladite au moins une couche faisant office de nappe de sommet (7a, 7b) comprend une nappe dans lequel les câblés (12) sont inclinés par rapport au plan équatorial du bandage pneumatique de manière telle que des câblés (12) dans une nappe croisent des câblés dans une autre nappe ou dans une nappe adjacente.

6. Bandage pneumatique selon la revendication 1 ou 2, dans lequel le revêtement (9) est disposé à l'extérieur en direction radiale de ladite au moins une couche faisant office de nappe de sommet (7a, 7b) et la bande (T) est enroulée en spirale et en direction circonférentielle autour de ladite au moins une couche faisant office de nappe de sommet (7a, 7b) à partir
(i) d'environ un bord axial de ladite au moins une couche faisant office de nappe de sommet (7a, 7b) jusqu'à environ l'autre bord axial de ladite au moins une couche faisant office de nappe de sommet (7a, 7b) ; et
(ii) en chevauchant un bord axial de ladite au moins une couche faisant office de nappe de sommet (7a, 7b) jusqu'à chevaucher l'autre bord axial de ladite au moins une couche faisant office de nappe de sommet (7a, 7b), de préférence d'une manière telle que chaque bord axial du revêtement (9) est aligné à proximité d'un bord axial respectif de la couche faisant office de nappe de sommet.

7. Bandage pneumatique selon au moins une des revendications précédentes, dans lequel la largeur (w) de la bande (T) se situe dans la plage de 9 mm à 27 mm et/ou dans lequel l'épaisseur (t) de la bande (T) se situe dans la plage de 0,5 mm à 1,1 mm.

8. Bandage pneumatique selon au moins une des revendications précédentes, dans lequel le pas d'enroulement (PA, PB) de la bande (T) change, en continu ou par paliers, dans la direction orientée vers l'intérieur en direction axiale du bandage pneumatique (1), en direction du plan équatorial (EP) du bandage pneumatique (1) d'une manière telle que le pas d'enroulement (PA) dans la zone centrale (7A) de la structure de renforcement de ceinture est supérieur par rapport au premier et au deuxième côté externe respectifs en direction axiale du revêtement (9) de chaque côté du plan équatorial (EP) du bandage pneumatique (1).

9. Bandage pneumatique selon au moins une des revendications précédentes, dans lequel le pas d'enroulement forme une structure en accordéon.

10. Bandage pneumatique selon au moins une des revendications précédentes, dans lequel la bande (T) enroulée en spirale et en direction circonférentielle représente une bande continue (T) enroulée en spirale et en direction circonférentielle.
